# EUROPÄISCHE PATENTANMELDUNG

(11) **EP 3 744 666 A1**
(43) Veröffentlichungstag der Anmeldung: **02.12.2020**
(21) Anmeldenummer: 20176227.5
(22) Anmeldetag: 25.05.2020
(51) Int. Cl.: B65G 59/10

(54) **BEFÖRDERN VON TRAYSTAPELN MIT EINER DENESTER-EINHEIT**

(30) Priorität: 27.05.2019 DE 102019207724
(71) Anmelder: MULTIVAC Sepp Haggenmüller SE & Co. KG, 87787 Wolfertschwenden (DE)
(72) Erfinder: REUBER, Daniel, 87437 Kempten (DE)
(74) Vertreter: Grünecker Patent- und Rechtsanwälte PartG mbB

(57) **Zusammenfassung**

Das Verfahren zum Befördern von Traystapeln (1) mit einer Denester-Einheit (2), wobei die Denester-Einheit (2) ein Magazin (3) und eine Zuführung (4) aufweist, wobei die Zuführung (4) ein Transportband (5) aufweist und die Traystapel (1) mit einem Abstand auf dem Transportband (5) in einer Transportrichtung (T) zum Magazin (3) transportiert werden, sieht vor, dass die Traystapel (1) an einem Abwurfende (6) des Transportbands (5) gekippt und in deren gekipptem Zustand auf dem Transportband (5) weitergeführt werden, bis sie in einen Schacht (7) des Magazins (3) abgeworfen werden.

## Beschreibung

Die vorliegende Erfindung bezieht sich auf ein Verfahren zum Befördern von Traystapeln mit einer Denester-Einheit gemäß dem Oberbegriff des Anspruchs 1.

Die Traystapel bestehen aus einzelnen, gestapelten Behältern (d.h. Halbschalen), diese werden z.B. in der Lebensmittelindustrie zu Verpackungszwecken benutzt. In heutigen Verpackungsanlagen werden die Traystapel von einem Bediener auf ein Transportband gebracht. Dabei können sie einen unregelmäßigen Abstand zueinander aufweisen. An einem anderen Ende des Transportbands ist zum Aufnehmen und Entstapeln von Traystapeln eine Denester-Einheit mit einem Magazin angeordnet. Auf der Höhe dieses Endes des Transportbands ist herkömmlich üblicherweise eine Fallklappe vorgesehen, mit z.B. an der Denester-Einheit angeordneten, horizontal beweg- oder drehbaren Schieberblechen. Der vorderste Traystapel wird von dem Ende des Transportbands auf die Schieberbleche, welche sich im geschlossenen Zustand befinden, transportiert. Zu einem gegebenen Zeitpunkt öffnet sich die Fallklappe durch die Bewegung der Schieberbleche, und der Traystapel fällt zum Entstapeln in den Schacht des Magazins der Denester-Einheit. Nach der Abarbeitung von dem in dem Schacht befindlichen Traystapel sinkt das obere Ende des Traystapels zu einem niedrigeren Niveau und das Transportband bewegt sich anschließend weiter in Richtung Schacht, um den nächsten Traystapel auf die geschlossenen Schieberbleche zu transportieren. Diese Art der Beförderung von Traystapeln mit einer Denester-Einheit ist kostenintensiv und konstruktiv aufwendig.

Aufgabe der Erfindung ist es, das Befördern von Traystapeln mit einer Denester-Einheit in kostengünstiger Hinsicht zu verbessern.

Gelöst wird diese Aufgabe durch ein Verfahren zum Befördern von Traystapeln mit einer Denester-Einheit des Anspruchs 1, sowie durch eine zum Durchführen dieses Verfahrens eingerichtete Denester-Einheit. Vorteilhafte Weiterbildungen der Erfindung sind in den Unteransprüchen angeführt.

Das erfindungsgemäße Verfahren zum Befördern von Traystapeln mit einer Denester-Einheit, wobei die Denester-Einheit ein Magazin und eine Zuführung aufweist, wobei die Zuführung ein Transportband aufweist und die Traystapel mit einem Abstand auf dem Transportband in einer Transportrichtung zum Magazin transportiert werden, sieht vor, dass die Traystapel an einem Abwurfende des Transportbands gekippt und in deren gekipptem Zustand auf dem Transportband weitergeführt werden, bis sie in einen Schacht des Magazins abgeworfen werden.

Dies ermöglicht es, auf die Fallklappe und die damit verbundenen Kosten für den Aufbau sowie die Instandhaltung zu verzichten und dadurch das Verfahren zum Befördern von Traystapeln mit einer Denester-Einheit in kostengünstiger Weise zu gestalten.

Typischerweise weisen die Traystapel in deren gekipptem Zustand einen Winkel von 5° bis 35° zur Horizontalen auf, weiter bevorzugt von 10° bis 25°.

Besonders vorteilhaft ist es, wenn die Traystapel auf dem Transportband mit seitlichen Leitvorrichtungen geführt werden. Dies vereinfacht die Ausrichtung der Traystapel auf der Zuführung bezüglich der Denester-Einheit für den Bediener. Somit kann die Zuführung von Traystapeln in einer schnelleren Geschwindigkeit durchgeführt werden.

Bevorzugt wird der gekippte Traystapel an einer Stirnführung des Magazins abgestützt und in den Schacht, vorzugsweise mit zwei Seitenführungen des Magazins, geführt. Die Stirnführung und Seitenführungen zusammen erleichtern, dass die Traystapel vertikal in den Schacht des Magazins fallen.

Insbesondere werden die Traystapel auf dem Transportband von einem Sensor erfasst, um die Traystapel besser nachführen zu können. Beispielweise können die Traystapel mit einer Lichtschranke, welche aus einer Lichtstrahlenquelle und einem Sensor besteht, detektiert werden, indem die Unterbrechung eines Lichtstrahls erkannt wird. Das Nachführen der Traystapel verhindert unerwünschte Unterbrechungen des Verfahrens durch Verhaken oder Kollision zwischen zwei hintereinander folgender Traystapel, beispielsweise während sich der vordere, noch nicht abgearbeitete Traystapel im Magazin und der folgende Traystapel sich hinten auf dem Transportband befindet.

Vorteilhafterweise werden die Traystapel nach der Erfassung durch einen Sensor auf einem Bereich des Transportbands, auf dem die seitlichen Leitvorrichtungen divergent zueinander verlaufen, weitergeführt. Dies kann einen möglichen Schlupf zwischen dem zu transportierenden Traystapel und dem Transportband vermeiden.

In einer vorteilhaften Ausführungsweise wird ein mit dem Sensor erfasster Traystapel nachgeführt, bis er in den Schacht abgeworfen wird. Dafür kann beispielweise der zurückgelegte Weg des Transportbandes mit einem Weg- oder Drehzahlsensor überwacht werden, nachdem die Traystapel wie oben ausgeführt von einem Sensor erfasst werden. Damit kann die Position der Traystapel relativ zu dem Abwurfende des Transportbandes detektiert werden. Dadurch kann der Abstand zwischen zwei benachbarten Traystapeln nach der Sensorerfassung festgestellt werden. Denn, wenn dieser Abstand geringer als ein bestimmter Grenzwert ist, besteht die Gefahr, dass die Traystapel sich verhaken oder kollidieren. Dies kann durch Rückwärtsfahren und Neupositionieren des von dem Sensor erfassten Traystapels verhindert werden.

In einer weiteren Ausführungsweise wird das Transportband für eine bestimmte Zeit gestoppt, sobald ein Traystapel, der dem in den Schacht abgeworfenen Traystapel folgt, vom Sensor erkannt wird; und/oder das Transportband wird gegen die Transportrichtung gefahren, falls bereits ein folgender Traystapel erkannt wurde, bevor der vordere Traystapel in den Schacht abgeworfen wurde. Dies verhindert eine Kollision zwischen dem vordersten Traystapel auf dem Transportband und dem im Magazin befindlichen Traystapel, der noch nicht ganz abgearbeitet ist.

In einer Ausführungsvariante wird das Kippen von Traystapeln durch ein gezieltes Abbremsen des Transportbandes durchgeführt. Vorzugsweise erfolgt das Abbremsen, wenn sich ein Traystapel wenigstens teilweise über das Abwurfende des Transportbands hinausragt - noch weiter bevorzugt dann, wenn sich in Draufsicht der Schwerpunkt des Traystapels bereits jenseits des Abwurfendes des Transportbands befindet.

Die Erfindung stellt weiterhin eine Vorrichtung zum Durchführen des oben beschriebenen Verfahrens mit einer Denester-Einheit dar, die ein Magazin und eine Zuführung aufweist, wobei die Zuführung ein Transportband aufweist, welches dazu geeignet ist, dass es im Betrieb Traystapel in einer Transportrichtung und einer Transportebene transportiert, wobei das Transportband ein Abwurfende und das Magazin einen Schacht zur Aufnahme eines Traystapels aufweist.

Besonders vorteilhaft ist es, wenn am Umfang des Schachts auf der Transportebene Führungselemente ortsfest angeordnet sind. Ortsfest angeordnete Bauteile sind hinsichtlich ihrer Konstruktion und Instandhaltung vorteilhaft gegenüber den aus dem Stand der Technik bekannten bewegbaren Bauteilen einer Fallklappe.

In einer besonders bevorzugten Variante weist das Magazin keine Fallklappe auf.

Vorzugsweise weist das Transportband eine gummierte Transportfläche mit einem genügend hohen Reibungskoeffizient (von z.B. 0,3 bis 0,8) auf, um die Traystapel im gekippten Zustand weiter zum Schacht hin zu transportieren. Dies sichert einen guten Kontakt zwischen dem Boden der Traystapel und der Transportfläche, sodass die gekippten Traystapel auf dem Transportband sicher weitergeführt werden können, ohne abzurutschen.

In einer anderen vorteilhaften Ausführungsvariante weist die Zuführung seitliche Leitvorrichtungen auf, die im Bereich des Abwurfendes des Transportbands divergent zueinander verlaufen. Damit kann ein möglicher Schlupf zwischen dem zu transportierenden Traystapel und dem Transportband vermieden werden.

Bevorzugt ist es, wenn die Zuführung wenigstens einen Sensor zum Erfassen eines Traystapels aufweist.

In einer Ausführungsvariante ist eine Steuereinheit vorgesehen, um die Geschwindigkeit des Transportbandes abhängig von einem Überstand der Traystapel über das Abwurfende des Transportbandes zu steuern.

Im Folgenden werden Ausführungsbeispiele der Erfindung anhand der Figuren näher beschrieben.
- Fig. 1: zeigt eine Seitenansicht einer erfindungsgemäßen Vorrichtung zum Befördern von Traystapeln mit einer Denester-Einheit.
- Fig. 2: zeigt eine Seitenansicht der erfindungsgemäßen Vorrichtung gemäß Fig. 1 in einem weiteren Verfahrensschritt.
- Fig. 3: zeigt eine Seitenansicht der erfindungsgemäßen Vorrichtung gemäß Fig. 2 in einem weiteren Verfahrensschritt.
- Fig. 4: zeigt eine Seitenansicht der erfindungsgemäßen Vorrichtung gemäß Fig. 3 in einem weiteren Verfahrensschritt.
- Fig. 5: zeigt eine Draufsicht der erfindungsgemäßen Vorrichtung gemäß Fig. 1.

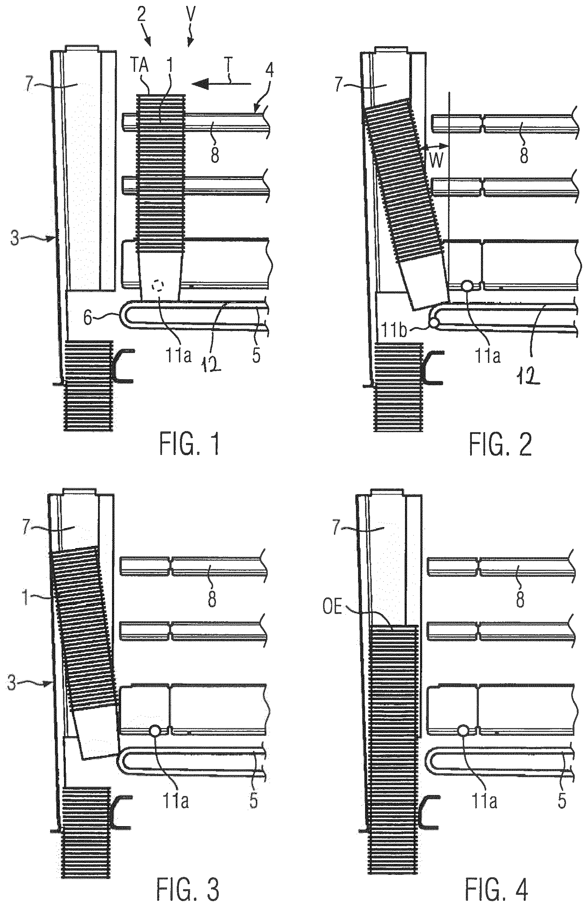

In Fig. 1 ist eine erfindungsgemäße Vorrichtung V zum Befördern von Traystapeln 1 mit einer Denester-Einheit 2 in Seitensicht dargestellt. Die Vorrichtung V weist ein Magazin 3 und eine Zuführung 4 auf. Auf der Zuführung 4 ist ein Transportband 5 vorgesehen. Das Transportband 5 weist eine gummierte Transportfläche 12 mit einem (Haft-)Reibungskoeffizienten von 0,3 bis 0,8 auf. Auf dem Transportband 5 werden Traystapel 1 von Trays TA in einer Transportrichtung T und einer Transportebene E gefördert. Die Traystapel 1 werden von einem Bediener oder maschinell zwischen zwei seitlichen gegenüberliegenden Leitvorrichtungen 8 auf dem Transportband 5 abgestellt und bis zu einem Abwurfende 6 des Transportbands 5 in einer Transportrichtung T gefördert.

Zwischen den hintereinander angeordneten Traystapeln 1 ist ein zeitlicher oder räumlicher Abstand vorgesehen, so dass diese nicht miteinander verhakt sind.

An der Zuführung 4, in der Nähe des Abwurfendes 6 des Transportbands 5, sind ein oder mehrere Sensoren 11 vorgesehen, die, wie in Fig. 1 dargestellt, an der Leitvorrichtung 8 angeordnet werden können. Es ist auch möglich, die Sensoren 11 an einer anderen Stelle an der Zuführung 4 anzuordnen, z.B. an der Seite des Transportbandes 5.

Das erfindungsgemäße Verfahren zum Befördern von Traystapeln 1 mit einer Denester-Einheit 2 sieht vor, dass die Traystapel 1 einzeln von dem Sensor 11 erfasst werden, bevor sie am Abwurfende 6 des Transportbands 5 ankommen. Zunächst wird der vorderste, auf dem Transportband 5 in Transportrichtung T geförderte Traystapel 1 an dem Abwurfende 6 gekippt und an dem Magazin 3 abgestützt. Fig. 2 zeigt einen Traystapel 1 auf dem Transportband 5 in dessen gekipptem und an dem Magazin 3 abgestütztem Zustand in Seitensicht. Die Traystapel 1 können in diesem Zustand einen Winkel W von 5° bis 35° zur Horizontalen aufweisen, weiter bevorzugt von 10° bis 25°. Dabei ist der Boden der Traystapel 1 noch in greifendem Kontakt mit der gummierten Transportfläche 12 des Transportbands 5. Die gekippten Traystapel 1 werden auf dem Transportband 5 weitergefördert, bis sie in einen Schacht 7 des Magazins 3 abgeworfen werden. Für das Weiterfördern der Traystapel 1 in deren gekipptem Zustand auf dem Transportband 5 sollte der Reibungskoeffizientenwert der Transportfläche 12, wie oben genannt, genügend hoch sein, um das Abrutschen der Traystapel 1 von der bewegenden Transportfläche 12 zu vermeiden.

Fig. 3 zeigt einen Traystapel 1, der in dessen gekipptem Zustand auf dem Transportband 5 weitergefördert wird und noch im Kontakt mit der Transportfläche 12 des Transportbands 5 steht.

Nach dem obengenannten Sensorerfassungsschritt der Traystapel 1 an der in Fig.1 gezeigten Position werden die Traystapel 1 nachgeführt, während sie weitergefördert werden, bis sie vollständig in den Schacht 7 des Magazin 3 abgeworfen sind. Die Nachführung der Traystapel 1 könnte beispielweise so durchgeführt werden, dass nach der Erfassung der Traystapel 1 mit einem Sensor 11a der zu verfahrene Weg des Transportbandes 5 auch mit einem Sensor 11b erfasst und über eine Software gesteuert wird.

Die Geschwindigkeit des Transportbandes 5 kann über eine (nicht gezeigte) Steuereinheit gesteuert werden.

Beispielsweise kann die Geschwindigkeit des Transportbandes 5 während des Förderns der Traystapel 1 konstant gehalten werden, so dass der Kipp-Vorgang des vordersten Traystapels 1 zu dem Schacht 7 des Magazins 3 ungefähr am Abwurfende 6 des Transportbands 5 startet.

Alternativ kann die Geschwindigkeit des Transportbandes 5 während des Förderns des Traystapels 1 geändert werden. Nachdem der auf dem Transportband 5 geförderte Traystapel 1 von dem Sensor 11a erfasst wurde, kann der Abstand des auf dem Transportband 5 gefördertenTraystapels 1 vom Abwurfende 6 des Transportbandes 5 erfasst werden. Dadurch kann das Transportband 5 gezielt abgebremst werden, wenn der auf dem Transportband 5 geförderte Traystapel 1 sich an dem oder schon bereichsweise (insbesondere mit seinem Schwerpunkt) jenseits des Abwurfendes 6 des Transportbandes 5 befindet. Das Abbremsen des Transportbandes 5 wird wie folgt durchgeführt. Eine erste Geschwindigkeit V1 des Transportbandes 5 kann innerhalb einer bestimmten Zeit um z.B. 40% bis 100% auf eine zweite Geschwindigkeit V2 gesenkt werden. Anschließend kann die Geschwindigkeit des Transportbandes 5 nach einer bestimmten Zeit wieder gesteigert werden. Es ist auch möglich, vor dem Steigern der zweiten Geschwindigkeit das Transportband 5 für eine bestimmte Zeit in der zweiten Geschwindigkeit V2 zu betreiben, zum Beispiel bis der gekippte Traystapel 1 in den Schacht 7 des Magazins 3 abgeworfen ist. Fig. 4 zeigt einen Traystapel 1, der vollständig in den Schacht 7 des Magazins 3 abgeworfen ist. Nachdem der vorderste auf dem Transportband 5 geförderte Traystapel 1 in den Schacht 7 des Magazins 3 vollständig abgeworfen wurde, wird das Transportband 5 für eine bestimmte Zeit gestoppt, bis der im Schacht 7 befindliche Traystapel 1 von der Denester-Einheit 2 abgearbeitet ist und das obere Ende OE diesen Traystapel 1 zu einer niedriger als die Transportebene E liegenden Ebene befördert wurde.

Nachdem der vorderste auf dem Transportband 5 geförderte Traystapel 1 in den Schacht 7 des Magazins 3 vollständig abgeworfen wurde, könnte das Transportband 5 auch gegen die Transportrichtung T gefahren werden, um ein Verhaken zwischen dem abgeworfenen Traystapel 1 und dem folgenden Traystapel zu verhindern.

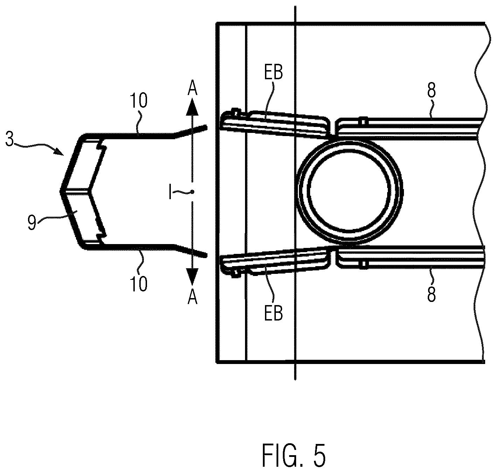

In Fig. 5 ist eine erfindungsgemäße Vorrichtung zum Befördern von Traystapeln 1 mit einer Denester-Einheit 2 in Draufsicht dargestellt. Die gegenüberliegenden seitlichen Leitvorrichtungen 8 stehen in einem Hauptbereich des Transportbands 5 ungefähr parallel zueinander. In einem Bereich des Transportbandes 6 in der Nähe seines Abwurfendes 6 verlaufen die gegenüberliegenden Leitvorrichtungen 8 divergent zueinander, so dass keine schlupferzeugende Reibung zwischen den Traystapeln 1 und den seitlichen Leitvorrichtungen 8 entstehen kann. Es ist möglich, die seitlichen Leitvorrichtungen 8 in der beschriebenen Gestaltung ortsfest einzurichten, so dass sie im Betrieb ihre Ausrichtungen nicht ändern. Alternativ können die Endbereiche EB der seitlichen Leitvorrichtungen 8 bewegbar eingerichtet werden, so dass sie sich z.B. nach der Sensorerkennung der Traystapel 1 von innen I nach außen A abwinkeln.

Fig. 5 zeigt des Weiteren das Magazin 3 der Denester-Einheit 2 von oben. Das Magazin 3 weist eine Stirnführung 9 und zwei Seitenführungen 10 auf. Die Traystapel 1, die an dem Abwurfende 6 des Transportbandes 5 gekippt sind, werden an der Stirnführung 9 des Magazins 3 abgestützt. Und durch die Seitenführungen 10 werden die Traystapel 1 zu dem Schacht 7 des Magazins 3 geführt, ohne dass sie nach außen A umkippen.

## Patentansprüche

1. Verfahren zum Befördern von Traystapeln (1) mit einer Denester-Einheit (2), wobei die Denester-Einheit (2) ein Magazin (3) und eine Zuführung (4) aufweist, wobei die Zuführung (4) ein Transportband (5) aufweist und die Traystapel (1) mit einem Abstand auf dem Transportband (5) in einer Transportrichtung (T) zum Magazin (3) transportiert werden, **dadurch gekennzeichnet, dass** die Traystapel (1) an einem Abwurfende (6) des Transportbands (5) gekippt und in deren gekipptem Zustand auf dem Transportband (5) weitergeführt werden, bis sie in einem Schacht (7) des Magazins (3) abgeworfen werden.

2. Verfahren nach Anspruch 1, **dadurch gekennzeichnet, dass** die Traystapel (1) in deren gekipptem Zustand einen Winkel (W) von 5° bis 35° zur Horizontalen aufweisen, weiter bevorzugt von 10° bis 25°.

3. Verfahren nach einem der Ansprüche 1 und 2, **dadurch gekennzeichnet, dass** die Traystapel (1) auf dem Transportband (5) mit seitlichen Leitvorrichtungen (8) geführt werden.

4. Verfahren nach einem der vorangehenden Ansprüche, **dadurch gekennzeichnet, dass** der gekippte Traystapel (1) sich an einer Stirnführung (9) des Magazins (3) abstützt, und in dem Schacht (7), vorzugsweise mit zwei Seitenführungen (10) des Magazins (3), geführt wird.

5. Verfahren nach einem der vorangehenden Ansprüche, **dadurch gekennzeichnet, dass** die Traystapel (1) auf dem Transportband (5) von einem Sensor (11a) erfasst werden.

6. Verfahren nach Anspruch 5, **dadurch gekennzeichnet, dass** die Traystapel (1) nach der Erfassung durch den Sensor (11a) auf einem Bereich des Transportbands (5), wo die seitlichen Leitvorrichtungen (8) divergent zueinander verlaufen, weitergeführt werden.

7. Verfahren nach einem der Ansprüche 5 oder 6, **dadurch gekennzeichnet, dass** der mit dem Sensor (11a) erfasste Traystapel (1) nachgeführt wird, bis er in den Schacht (7) abgeworfen wird.

8. Verfahren nach einem der Ansprüche 5 bis 7, **dadurch gekennzeichnet, dass** das Transportband (5) für eine bestimmte Zeit gestoppt wird sobald ein Traystapel (1), der dem in den Schacht (7) abgeworfenen Traystapel (1) folgt, vom Sensor (11a) erkannt wird; und/oder das Transportband (5) gegen die Transportrichtung (T) gefahren wird, falls bereits ein folgender ein Traystapel (1) erkannt wurde, bevor der vordere Traystapel (1) in den Schacht (7) abgeworfen wurde.

9. Verfahren nach einem der vorangehenden Ansprüche, **dadurch gekennzeichnet, dass** das Kippen von Traystapeln (1) durch ein Abbremsen des Transportbandes (5) unterstützt wird.

10. Denester-Einheit (2) mit einem Magazin (3) und einer Zuführung (4), wobei die Zuführung (4) ein Transportband (5) aufweist, wobei das Transportband (5) dazu geeignet ist, dass es im Betrieb Traystapel (1) in einer Transportrichtung (T) und einer Transportebene (E) transportiert, wobei das Transportband (5) ein Abwurfende (6) und das Magazin (3) einen Schacht (7) zur Aufnahme eines Traystapels (1) aufweist, **dadurch gekennzeichnet, dass** die Denester-Einheit (2) eingerichtet ist zum Durchführen eines Verfahrens nach einem der vorangehenden Ansprüche.

11. Denester-Einheit nach Anspruch 9, wobei am Umfang des Schachts (7) auf der Transportebene (E) Führungselemente (9, 10) ortsfest angeordnet sind.

12. Denester-Einheit nach einem der Ansprüche 9 bis 11, wobei das Transportband (5) eine gummierte Transportfläche (12) mit einem genügend hohen Reibungskoeffizienten aufweist, um die Traystapel (1) im gekippten Zustand weiter zum Schacht (7) hin zu transportieren.

13. Denester-Einheit nach einem der Ansprüche 9 bis 12, wobei die Zuführung (4) seitliche Leitvorrichtungen (8) aufweist, die im Bereich des Abwurfendes (6) des Transportbands (5) divergent zueinander verlaufen.

14. Denester-Einheit nach einem der Ansprüche 9 bis 13, wobei die Zuführung (4) wenigstens einen Sensor (11a) zum Erfassen eines Traystapels (1) aufweist.

15. Denester-Einheit nach einem der Ansprüche 9 bis 13, wobei eine Steuereinheit vorgesehen ist, um die Geschwindigkeit des Transportbandes (5) abhängig von einem Überstand des Traystapels (1) über das Abwurfende (6) des Transportbandes (5) zu steuern.
